# EUROPEAN PATENT SPECIFICATION

(11) **EP 2 250 950 B1**
(45) Date of publication and mention of the grant of the patent: **04.01.2012**
(21) Application number: 10004788.5
(22) Date of filing: 06.05.2010
(51) Int. Cl.: A47J 31/36

(54) **Machine for the preparation of brewed beverages**
Maschine zur Zubereitung von Brühgetränken
Machine pour la préparation de boissons par infusion

(30) Priority: 15.05.2009 IT BG20090022
(43) Date of publication of application: 17.11.2010
(73) Proprietor: EMMEBIELLE S.R.L., 21049 Tradate (VA) (IT)
(72) Inventor: Manunta, Mauro, 21049 Tradate (VA) (IT); Blanchino, Francesco, 22076 Mozzate (CO) (IT)
(74) Representative: Gatti, Enrico

(56) References cited:
- EP-A- 1 219 217
- EP-A- 1 980 183
- EP-A- 2 044 867
- WO-A-2008/093232

## Description

The present invention relates to a machine for preparing coffee or other beverages by infusion. The infusion is prepared by capsules (sachets).

The capsules are normally made of plastic material and are structured with a hollow cylindrical body. The upper and lower surfaces comprise small holes and possibly a filtering film positioned within these surfaces. They are generally provided with a projecting rim along their upper surface as a support means.

Various automatic or semiautomatic machines use these capsules.

These machines must be able to insert the new capsule and expel the used capsule.

There are various known methods for inserting and expelling the capsule.

The document EP 2 044 867 discloses a machine for the preparation of drinks by means of infusion including an infusion group including an introdution guide for a single capsule in a chamber. The machine further comprises an operating lever move a piston rectilinearly along on direction between a resting position and a working position.

An object of the invention is to provide a new machine for preparing coffee beverages which enables guided capsule insertion, capsule positioning, capsule blocking during infusion, and capsule expulsion.

Another object is to provide a small-dimension machine having few moving pieces.

A further object is to define a machine consisting of simple and reliable devices.

These and other objects are attained according to the present invention by a machine for preparing beverages by infusion, according to claim 1.

Further characteristics of the invention are described in the dependent claims.

The characteristics and advantages of the present invention will be apparent from the ensuing detailed description of one embodiment thereof, illustrated by way of non-limiting example in the accompanying drawings, in which:
Figure 1 is a schematic sectional side view of an open infusion unit, in accordance with the present invention;

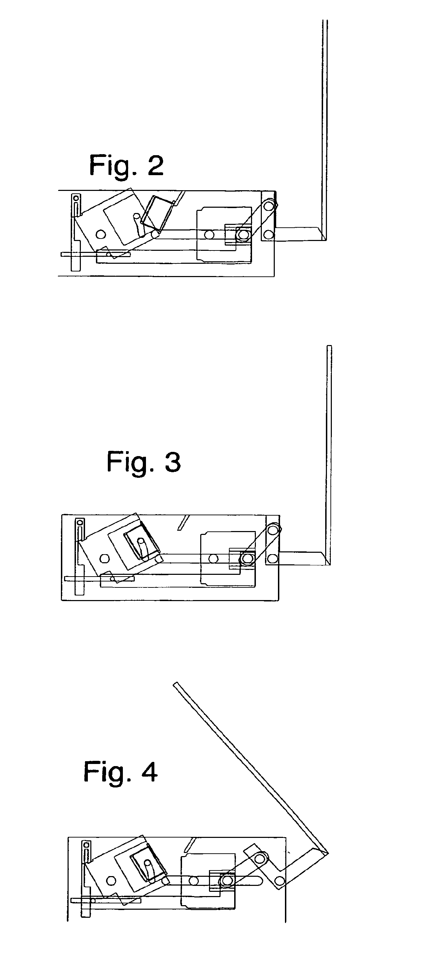

Figure 2 is a schematic sectional side view of an infusion unit during a capsule insertion step, in accordance with the present invention;
Figure 3 is a schematic sectional side view of an infusion unit during a first closure step, in accordance with the present invention;
Figure 4 is a schematic sectional side view of an infusion unit during a second closure step, in accordance with the present invention;

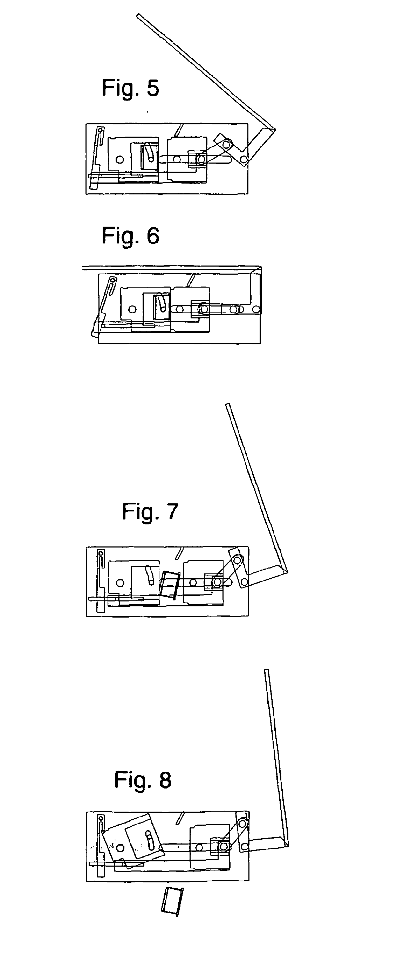

Figure 5 is a schematic sectional side view of an infusion unit during a third closure step, in accordance with the present invention;
Figure 6 is a schematic sectional side view of an infusion unit during a fourth closure step, in accordance with the present invention;
Figure 7 is a schematic sectional side view of an infusion unit shown during commencement of opening, in accordance with the present invention;
Figure 8 is a schematic sectional side view of an infusion unit during a capsule expulsion step, in accordance with the present invention.

The infusion unit 10 comprises a pair of containing shoulders 11 for the unit, joined together by pins, not shown.

A lever 13 is pivoted on a pivot 14, fixed to the shoulders 11.

Specifically, the lever 13 has an end portion 15, positioned downstream of the pivot 14, which extends parallel to the main arm of the lever 13, in the direction opposite to that of the main arm of the lever 13. In other words, the lever 13 is of U-shape, with one bar longer than the other, the pivot 14 being positioned in a corner of the U.

The lever 13 is rotatably connected to a first connecting rod 16 by means of the pivot 17. The connecting rod 16 is rotatably connected to a second connecting rod 18 by means of a connecting pin 19.

In particular, the connecting rod 18, which is of L-shape with the end of the short arm being associated with the connecting pin 19 towards the end distant from the pin 19, is provided with a stop 20.

The stop 20 can slide in a horizontal longitudinal groove 21 positioned on the shoulders 11.

A pin 22, with which a vertical bar 23 is associated, is disposed towards the upper end of the shoulders 11 in a position distant from the lever 13.

The vertical bar 23 is provided with a pawl 24 in proximity to the pin 22.

An infusion unit 10 also comprising a chamber 31 can rotate on a pivot 32 positioned towards the base of the chamber 31. On the chamber a stop 29 is positioned towards the edge of the chamber 31 and hence opposite the pivot 32.

The stop 29 can slide along a curved guide 30 positioned on the chamber 31.

A recess 25 is positioned on the top of the base of the chamber 31 to cooperate with the pawl 24.

Towards the interior of the infusion unit 10, the chamber 31 presents a cavity 33 in which a capsule 34 can be positioned.

In the base of the cavity 33 there is a thrust spring (not shown) or an elastic means for thrusting the capsule 34, to the rear of which there is a hole (not shown) for the exit of the infusion.

The chamber 31 also comprises an undercut 28 in the base of its downwardly facing portion.

The infusion unit 10 also comprises a piston 35.

The piston 35 comprises lateral projections 36 (stops) which slide along the guides 37 (horizontal longitudinal slots) positioned in the shoulders 11.

The connecting pin 19, connected to the piston 35, also slides along the guides 37. The lateral projections 36 act as a guide for the piston 35, the connecting pin 19 providing the motion to the piston 35 by virtue of its movement by the lever 13.

The piston 35 comprises tubes (not shown) passing through it to supply water to the capsule 34 when stored in the chamber 33.

A guide bar 40 for the capsule 34 is disposed on the shoulders 11 transversely to the shoulders 11. The guide bar 40 is preferably inclined by about 30° towards the chamber 31.

The figures show only one side of the infusion unit 10, a large part of the aforedescribed elements being present in the infusion unit in pairs, all being fixed rigidly or movably to the shoulders 11.

The operation of the device of the invention is apparent from that described and illustrated, and is substantially the following.

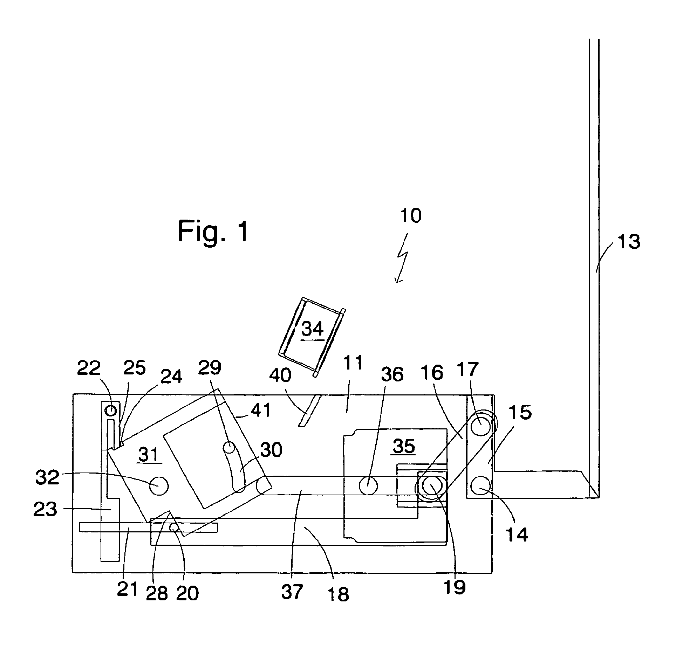

The user, with the lever 13 in a virtually vertical open position as shown in Figure 1, inserts a capsule 34. In this step the chamber 31 is inclined upwards by about 30°, the angle being anywhere between 20° and 40°, it being held in position by the pawl 24 which is positioned in the recess 25, and also by the stop 20 which is positioned abutting against the undercut 28.

The capsule 34 is inserted and guided on one side by the guide bar 40, and on the other side by the edge 41 of the chamber 31, positioned in front of the piston 35.

The capsule 34 descends and rests on the edge 41 of the chamber 31. The distance of the guide bar 40 from the edge 41 of the chamber 31 is previously determined on the basis of the width of the capsule 34.

At this point, the operator manually or automatically moves the lever 13, or any other equivalent means, from its rest position to its working position, i.e. closed position, hence causing the piston 35 to move towards the chamber 31. In particular, as the lever is lowered it pushes the connecting rod 16 forwards (towards the chamber 31), this in succession urging the connecting pin 19, fixed to the piston 35, to advance towards the chamber 31. The connecting rod 18 advances and the stop 20 slides in the longitudinal groove 21.

The stop 20 no longer abuts against the undercut 28, but the pawl 24 still maintains the chamber 31 inclined.

In advancing, the stop 20 reaches into contact with the vertical bar 23, and pushes it outwards, making it rotate about its pivot 22.

In this manner the pawl 24, which is positioned within the recess 25, leaves it, so leaving the chamber 31 free to rotate about the pivot 32, the pin 29 slides along the guide 30, and the chamber 31 becomes positioned practically horizontal.

In the meantime the piston 35 has continued its forward stroke, to thrust the capsule 34 into the cavity 33 by overcoming the resistance of the spring (not shown), and abut against the edge 41 of the chamber 31, where seal gaskets, not shown, are present.

When in the closed position, the lever 13 is substantially horizontal, as is the first connecting rod 16.

A suitable sensor (not shown) causes water to be supplied to the infusion unit 10 and the infusion is fed to the user.

On reopening the infusion unit 10, i.e. when the user again operates the lever 14 to return it to the open vertical position, it draws towards it the first and second connecting rod 16 and 18, the piston 35 withdraws and the spring (not shown) pushes the capsule 34, which leaves the cavity 33.

Having returned to its initial position the piston 35 leaves sufficient space for the capsule to fall downwards.

In withdrawing, the second connecting rod 18 reaches the point in which the stop 20 still abuts against the undercut 28, it pushes the chamber 31, causing it to rotate about the pivot 32, and urging the pawl 24 into the recess 25, so positioning the chamber 31 inclined.

The distance between the piston 35 when in its rest position and the outer edge 41 of the chamber 31 must be such that the capsule 34 is able to rotate during its exit to prevent it becoming blocked within the infusion unit 10. This distance will hence be equal to or greater than the capsule diameter. The aforedescribed infusion unit 10 is essentially suitable for any type of capsule. In particular, it is also suitable for capsules without the usual pronounced rim.

The lever 13 can be operated manually or be activated by a suitable electric motor with relative step-down gear, operated for example by a sensor (or switch) which is activated at the moment of insertion of the capsule into the infusion unit 10.

Advantageously this infusion unit 10, because of its formation, can also be used with automatic loaders, by providing a loader in proximity to the chute.

The aforedescribed infusion unit 10 will not be further described in detail as an expert of the art, on the basis of the aforegoing, is able to form it.

The materials used, and the dimensions, can be chosen at will according to requirements and to the state of the art.

## Claims

1. A machine for preparing beverages by infusion, comprising an infusion unit (10); said infusion unit (10) comprising: a guide (40) for inserting a single capsule (34); a lever (13) for operating a piston (35); said piston (35) being arranged to move rectilinearly along one direction and having a first rest position and a second working position; a chamber (31) arranged to receive said capsule (34); said chamber (31) has a first capsule insertion position and a second working position; said chamber (31) being maintained in said first position by a pawl (24); said chamber (31) being moved from said first position to said second position by means of said lever (13).

2. A machine as claimed in claim 1, **characterised in that** said guide (40) comprises an inclined bar transverse to said infusion unit (10).

3. A machine as claimed in claim 1, **characterised in that** associated with said lever (13) there is a stop (20) which abuts against an undercut (28) provided on said chamber (31); said chamber (31) being positioned in said first position when said lever is operated.

4. A machine as claimed in claim 1, **characterised in that** said chamber (31) passes from said first position to said second position when a stop associated with said lever (13) encounters said pawl (24).

5. A machine as claimed in claim 1, **characterised in that** said chamber (31) comprises a recess (25) which cooperates with said pawl (24).

6. A machine as claimed in claim 1, **characterised in that** when in said first position, said chamber (31) has its recess (25) inclined to a longitudinal axis of said infusion unit (10), said chamber (31), when in said second position, having the axis of said recess (25) positionned substantially on said longitudinal axis of said infusion unit (10).

7. A machine as claimed in claim 1, **characterised in that** when in said first position, said chamber (31) has its recess (25) inclined by an angle between 20° and 40° to a longitudinal axis of said infusion unit (10), such that said capsule (34) becomes positioned resting on an edge of said chamber (31).

8. A machine as claimed in claim 1, **characterised in that** said infusion unit (10) comprises a lever (13) coupled to said piston (35) by means of a connecting rod (16).

9. A machine as claimed in claim 1, **characterised in that** said piston (35) comprises lateral guide protuberances (36) for its rectilinear movement.

10. A machine as claimed in claim 1, **characterised in that** said chamber (31) is moved from said first position to said second position and vice versa by said lever (13), with which a first (16) and a second (18) connecting rod are associated.

## Patentansprüche

1. Maschine zum Herstellen von Getränken durch Infusion mit einer Infusionseinheit (10), wobei die Infusionseinheit (10) aufweist: eine Führung (40) zum Einsetzen einer einzelnen Kapsel (34), einen Hebel (13) zum Betätigen eines Kolbens (35), wobei der Kolben dazu angepasst ist, um sich geradlinig entlang einer Richtung zu bewegen, und eine erste Ruhestellung und eine zweite Arbeitsstellung hat, eine Kammer (31), die dazu ausgestaltet ist, um die Kapsel (34) aufzunehmen, **dadurch gekennzeichnet, dass** die Kammer (31) eine erste Kapseleinsetzstellung und eine zweite Arbeitsstellung hat, wobei die Kammer (31) durch eine Sperrklinke (24) in der ersten Position gehalten wird, wobei die Kammer mittels des Hebels (13) aus der erste Position in die zweite Position bewegt wird.

2. Maschine wie in Anspruch 1 beansprucht, **dadurch gekennzeichnet, dass** die Führung (40) eine geneigte Stange quer zu der Infusionseinheit (10) aufweist.

3. Maschine wie in Anspruch 1 beansprucht, **dadurch gekennzeichnet, dass** dem Hebel (13) ein Stopper (20) zugeordnet ist, der gegen eine Vertiefung (28) anliegt, die an der Kammer (31) vorgesehen ist, wobei die Kammer (31) in der ersten Stellung bleibt, wenn der Hebel betätigt wird.

4. Maschine wie in Anspruch 1 beansprucht, **dadurch gekennzeichnet, dass** die Kammer (31) von der ersten Stellung in die zweite Stellung übergeht, wenn ein dem Hebel (13) zugeordneter Stopper auf die Sperrklinke (24) trifft.

5. Maschine wie in Anspruch 1 beansprucht, **dadurch gekennzeichnet, dass** die Kammer (31) eine Vertiefung (25) aufweist, die mit der Sperrklinke (24) zusammenwirkt.

6. Maschine wie in Anspruch 1 beansprucht, **dadurch gekennzeichnet, dass** die Kammer (31), wenn sie sich in der ersten Position befindet, mit ihrer Vertiefung (25) geneigt zu einer Längsachse der Infusionseinheit (10) ist, wobei die Kammer (31), wenn sie sich in der zweiten Position befindet, mit der Achse der Vertiefung (25) im Wesentlichen auf der Längsachse der Infusionseinheit (10) ist.

7. Maschine wie in Anspruch 1 beansprucht, **dadurch gekennzeichnet, dass** die Kammer (31), wenn sie sich in der ersten Position befindet, mit ihrer Vertiefung (25) in einer Neigung zwischen einem Winkel zwischen 20° und 40° zur Längsachse der Infusionseinheit (10) ist, so dass die Kapsel (34) in Anlage an einem Rand der Kammer (31) positioniert wird.

8. Maschine wie in Anspruch 1 beansprucht, **dadurch gekennzeichnet, dass** die Infusionseinheit (10) einen Hebel (13) aufweist, der mit dem Kolben (35) mittels einer Verbindungsstange (16) gekoppelt ist.

9. Maschine wie in Anspruch 1 beansprucht, **dadurch gekennzeichnet, dass** der Kolben (35) seitliche Führungsvorsprünge (36) für seine geradlinige Bewegung aufweist.

10. Maschine wie in Anspruch 1 beansprucht, **dadurch gekennzeichnet, dass** die Kammer (31) von der ersten Position in die zweite Position und umgekehrt durch den Hebel (13) bewegt wird, dem eine erste (16) und eine zweite Verbindungsstange (18) zugeordnet sind.

## Revendications

1. Machine de préparation de boissons par infusion, comprenant une unité d'infusion (10); ladite unité d'infusion (10) comprenant: un guidage (40) pour insérer un seule capsule (34) ; un levier (13) pour actionner un piston (35); ledit piston (35) étant agencé pour se déplacer de façon rectiligne le long d'une direction et possédant une première position de repos et une seconde position de fonctionnement; une chambre (31) agencée pour recevoir ladite capsule (34); **caractérisée en ce que** ladite chambre (31) comporte une première position d'insertion de capsule et une seconde position de fonctionnement; ladite chambre (31) étant maintenue dans ladite première position par un cliquet (24); ladite chambre (31) étant déplacée de ladite première position à ladite seconde position au moyen dudit levier (13).

2. Machine selon la revendication 1, **caractérisée en ce que** ledit guidage (40) comprend une barre inclinée transversale à ladite unité d'infusion (10).

3. Machine selon la revendication 1, **caractérisée en ce que**, en association avec ledit levier (13), il est prévu une butée (20) qui vient en butée contre un dégagement (28) prévu sur ladite chambre (31); ladite chambre (31) étant positionné dans ladite première position lorsque ledit levier est actionné.

4. Machine selon la revendication 1, **caractérisée en ce que** ladite chambre (31) passe de ladite première position à ladite seconde position lorsqu'une butée associée audit levier (13) rencontre ledit cliquet (24).

5. Machine selon la revendication 1, **caractérisée en ce que** ladite chambre (31) comprend un évidement (25) qui coopère avec ledit cliquet (24).

6. Machine selon la revendication 1, **caractérisée en ce que**, lorsqu'elle est dans ladite première position, ladite chambre (31) a son évidement (25) incliné par rapport à un axe longitudinal de ladite unité d'infusion (10), ladite chambre (31), lorsqu'elle est dans ladite seconde position, ayant l'axe dudit évidement (25) positionné sensiblement sur ledit axe longitudinal de ladite unité d'infusion (10).

7. Machine selon la revendication 1, **caractérisée en ce que**, lorsqu'elle est dans ladite première position, ladite chambre (31) a son évidement (25) incliné selon un angle compris entre 20° et 40° par rapport à un axe longitudinal de ladite unité d'infusion (10), de sorte que ladite capsule (34) soit positionnée en repos sur un bord de ladite chambre (31).

8. Machine selon la revendication 1, **caractérisée en ce que** ladite unité d'infusion (10) comprend un levier (13) couplé avec ledit piston (35) au moyen d'une bielle de connexion (16).

9. Machine selon la revendication 1, **caractérisée en ce que** ledit piston (35) comprend des protubérances de guidage latérales (36) pour son mouvement rectiligne.

10. Machine selon la revendication 1, **caractérisée en ce que** ladite chambre (31) est déplacée de ladite première position à ladite seconde position et vice versa par ledit levier (13), auquel une première (16) et une seconde (18) bielles de connexion sont associées.
